Europäisches Patentamt

European Patent Office

Office européen des brevets

(11) Publication number: **0 369 784**
**A2**

## EUROPEAN PATENT APPLICATION

(21) Application number: 89311873.7

(22) Date of filing: **16.11.89**

(51) Int. Cl.5: **G11B 5/82, G11B 5/84**

(30) Priority: **16.11.88 JP 289560/88**

(43) Date of publication of application:
**23.05.90 Bulletin 90/21**

(84) Designated Contracting States:
**DE GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Yamamoto, Koutaro c/o Patent**
**Division**
**Kabushiki Kaisha Toshiba 1-1 Shibaura**
**1-chome**
**Minato-ku Tokyo(JP)**

(74) Representative: **Freed, Arthur Woolf et al**
**MARKS & CLERK 57-60 Lincoln's Inn Fields**
**London WC2A 3LS(GB)**

(54) **Magnetic disk and production method thereof.**

(57) The present magnetic disk comprises a substrate layer which has a plurality of grooves formed almost concentrically in the circumferential direction of the magnetic disk so that the angle between the disk tangent and a groove increases as the groove approaches the disk periphery, and a magnetic recording layer formed on the substrate layer. In the central area of the disk, good magnetic force resistance Hc, coercive squareness ratio, and recording density can be obtained and in the peripheral area, the OWM characteristics can be improved.

# F I G. I

EP 0 369 784 A2

## Magnetic Disk and Production Method thereof

This invention relates to a sputtered magnetic disk and to a production method thereof.

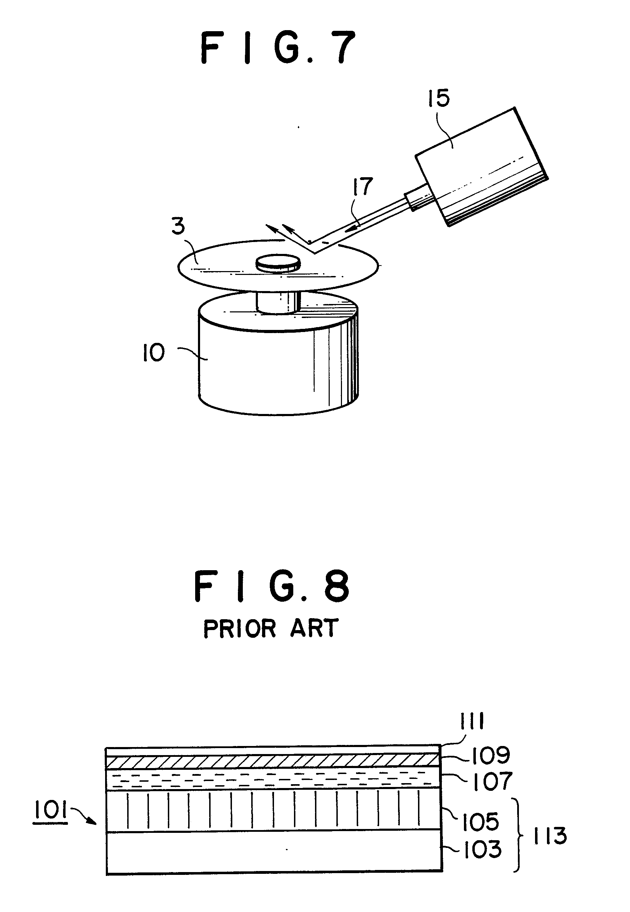

A prior magnetic disk produced through sputtering is shown in Fig. 8.

A magnetic disk 101 in the drawing has a metal base 103 made of, for example, aluminum, on which a hardening layer 105 such as a nickel-plated or anodized layer is formed. The metal base 103 and the hardening layer 105 form a substrate 113.

The substrate 113 has a mirror-polished surface, which is further polished circumferentially with an abrasive tape or abrasive powder to produce shallow grooves. Those grooves are made to provide a larger surface roughness and the production of such grooves is generally called "texturing".

A foundation layer 107 made of, for example, Cr is formed on the textured substrate 113, a ferromagnetic recording layer 109 made of, for example, CoNi or CoNiCr is formed on the foundation layer 107, and a protective layer 111 made of, for example, C is formed on the magnetic recording layer 109.

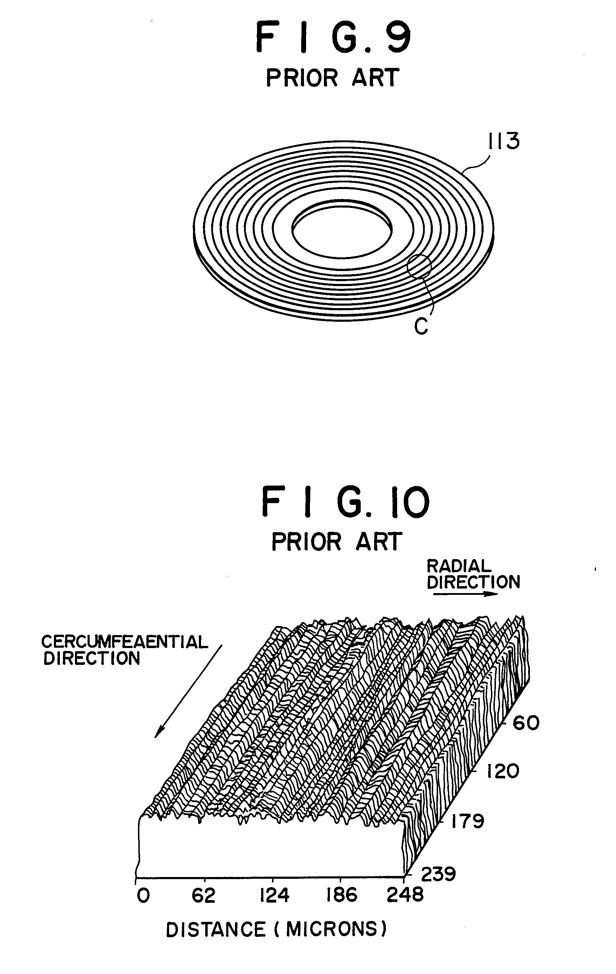

Fig. 9 shows a perspective view of the textured substrate 113 and Fig. 10 shows an enlarged detail of the surface of the substrate 113.

As shown in those drawings, the substrate 113 has a plurality of shallow grooves formed circumferentially in its surface.

There are several reasons why the substrate is textured.

First, those concentric grooves formed under the magnetic recording layer 109 can improve the recording characteristics of the layer 109 because of crystal and magnetic anisotropies of the material.

Second, a magnetic disk device usually employs the contact start/stop (CSS) system. According to the CSS system, during normal operation of the device, a magnetic disk is rotating and the air flow produced by the disk rotation and the dynamic pressure effect of the magnetic head cooperate to raise the magnetic head off the magnetic disk. During start-up or stop operation of the device, the magnetic head and disk are sliding in contact with each other.

Repetition of the CSS operation may wear the magnetic disk or head to cause some troubles with it. To prevent possible troubles, a lubricant is usually applied to the surface of the disk.

If the magnetic disk which comes into contact with the magnetic head is mirror-polished and too smooth, however, the magnetic head is pressed against the disk when the device is not in operation and adsorption occurs between the contact surfaces.

This requires such a large surface roughness of the magnetic disk that the adsorption may not occur.

Even if no lubricant is applied, moisture in the atmosphere may condense on the disk. Therefore, a large surface roughness is required and the disk must be textured.

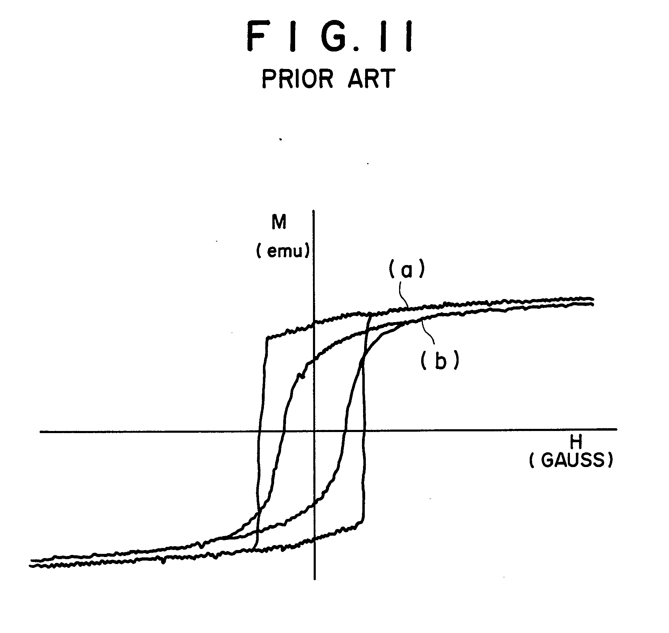

·Fig. 11 shows the magnetic characteristics measurements (M-H curves) of the prior magnetic disk, in which Cr is sputtered on the textured substrate 113 to form the foundation layer 107 and a CoNi alloy is sputtered on the foundation layer 107 to form the magnetic recording layer 109.

In the drawing, the curve (a) shows the circumferential magnetic characteristics and the curve (b) shows the radial magnetic characteristics. As can be seen from the drawing, the circumferential characteristics (curve (a)) have the larger magnetic force resistance Hc and the more clear coercive squareness ratio S of the magnetic characteristics (M-H curves) than the radial characteristics (curve (b)).

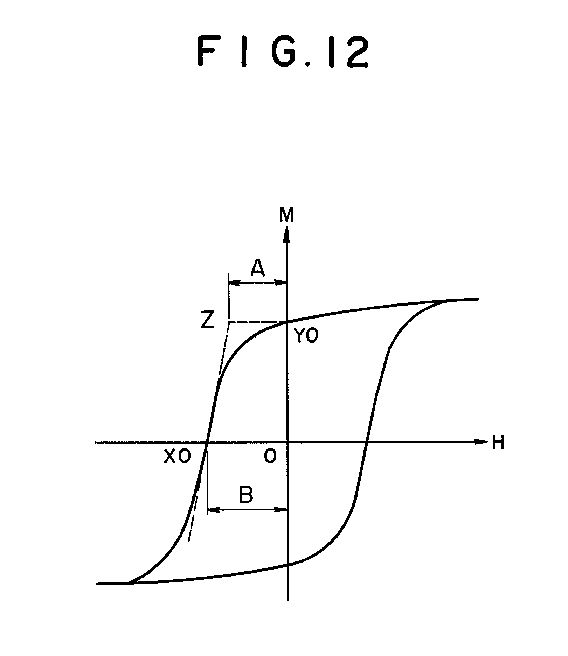

The definition of the coercive squareness ratio S of the magnetic characteristics (M-H curves) is explained as follow using Fig. 12. In the figure of the magnetic characteristics (M-H curves), M shows an intensity of magnetization, and H shows a magnetic force resistance. The coercive squareness ratio S is defined by $S = A \div B$. The variable B is the distance between the origin and the point XO where the characteristic curve crosses the X axis in the minus direction from the origin. The variable A is the distance between the point Z and the point YO. The point YO is the point where the characteristic curve crosses the Y axis in the plus direction from the origin, and the point Z is the point where the tangent line to the characteristic curve on the point XO crosses the parallel line to the X axis passing the point YO. The larger the value of the coercive squareness ratio S is, the better the coercive squareness ratio S is.

Thus larger magnetic force resistance Hc and more clear coercive squareness ratio of the circumferential characteristics increase the reproduction output of the magnetic head and the recording density of the magnetic disk, resulting in much improved recording characteristics.

Namely, generally it is desireable that the magnetic characteristics are able to make the reproduction output of the magnetic head large and to make the recording density of data high. Therefore, in order to make the reproduction output of the magnetic head large, it is necessary that the magnetic force resistance Hc is large. And in order to make the recording density of data high, it is necessary that the coercive squareness ratio S of the magnetic characteristics (M-H curves) is good.

According to the prior texturing technology, however, those concentric grooves are made almost in the circumferential direction of the disk.

Therefore, an excessively large magnetic force resistance Hc in the circumferential direction provides not only a large reproduction output of the magnetic head and an improved recording density but a deterioration of overwrite modulator (OWM) characteristic on the periphery. Consequently, there is a disadvantage that the recording characteristics of the entire disk may get worse.

The overwrite modulator (OWM) characteristic is explained as follows. In the magnetic disk device, the change of recording data means that the new data are recorded over the old data which had recorded already without deleting the old data. In such a case, the overwrite modulator (OWM) characteristic is a value which shows how the old data which had already recorded are erased by recording the new data. If the overwrite modulator (OWM) characteristic isn't good, the magnetic head reads confusedly the new data and the old data and then the error occurs.

In addition, abrasive tapes or powder are used to polish the prior textured disk. Microscopically, that disk is likely to have sharp projections or burrs.

Most of the projections or burrs pass through the thin film formed on the textured disk and scratch both the magnetic disk and head while they are sliding during the CSS operation.

To solve this problem, tape-cleaning or varnishing is carried out after the texturing to remove the projections or burrs. That solution, however, has drawbacks that the production process becomes more complicated and more expensive and it cannot remove all of the projections or burrs.

It is, therefore, an object of the present invention to provide a magnetic disk having better OWM characteristics on its periphery and a production method thereof so that the problems of the prior disks and methods can be eliminated.

To attain the object, the present invention provides a magnetic disk comprising a substrate layer and a magnetic recording layer formed on the substrate layer. The substrate layer has a plurality of grooves formed almost concentrically in the circumferential direction of the disk so that the angle between the disk tangent and a groove increases as the groove approaches the disk periphery.

The magnetic disk according to the present invention has grooves formed in the substrate layer so that the angle between the tangential direction and a groove increases as the groove approaches the disk periphery.

In the central area of the magnetic disk, therefore, the running direction of the textured grooves is approximately equivalent to the tangential direction of the disk and the magnetic anisotropy of the magnetic recording layer is directed to that direction, resulting in a higher magnetic force resistance Hc and a clear coercive squareness ratio.

On the other hand, the peripheral area of the magnetic disk has a larger angle between the groove and the disk tangential direction, resulting in a slight decrease in magnetic force resistance Hc and coercive squareness ratio which produce good OWM characteristics.

Fig. 1 is a perspective view of a substrate of the magnetic disk according to the present invention.

Fig. 2 shows an enlarged detail of the area A of the substrate shown in Fig. 1.

Fig. 3 shows an enlarged detail of the area B of the substrate shown in Fig. 1.

Fig. 4 shows the relationship between the angle (cross angle) which is made by the groove formed in the substrate with the tangential direction, and the radial distance of the groove.

Fig. 5 is a schematic representation of a texturing device which employs an abrasive tape.

Fig. 6 is a graph showing the magnetic force resistance of the magnetic disk according to the present invention.

Fig. 7 is a schematic representation of another texturing device which sprays abrasive powder onto the rotating substrate.

Fig. 8 is a cross-sectional view of a prior sputtered magnetic disk.

Fig. 9 is a perspective view of a substrate of the prior magnetic disk.

Fig. 10 is an enlarged detail of the substrate surface of the prior magnetic disk.

Fig. 11 is a graph for showing the magnetic characteristics of the magnetic recording layer of the prior magnetic disk.

Referring to the attached drawings, an embodiment according to the present invention will be described below in detail.

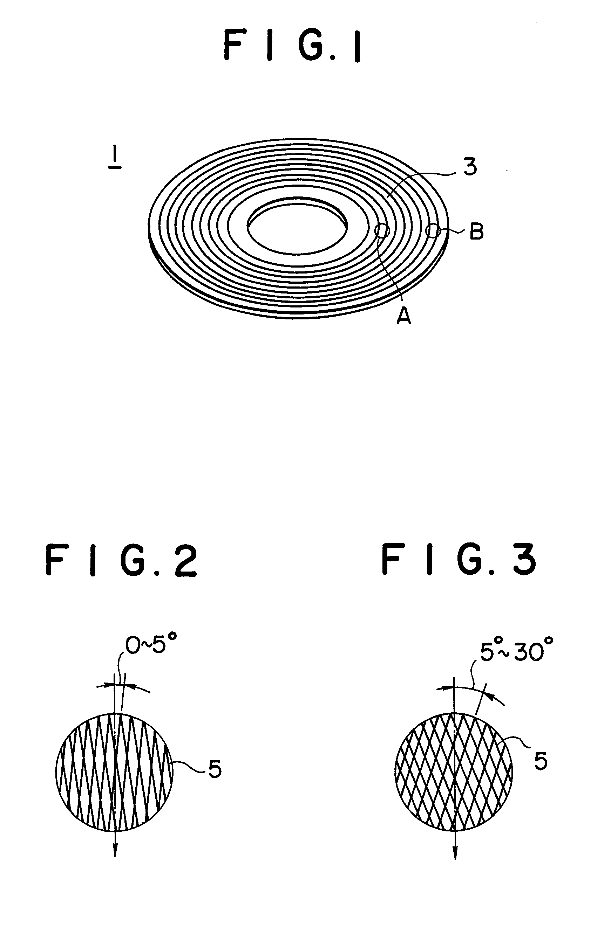

Fig. 1 is a perspective view of a substrate of an embodiment according to the present invention.

The present magnetic disk has the same layer configuration as that of the prior disk shown in Fig. 8.

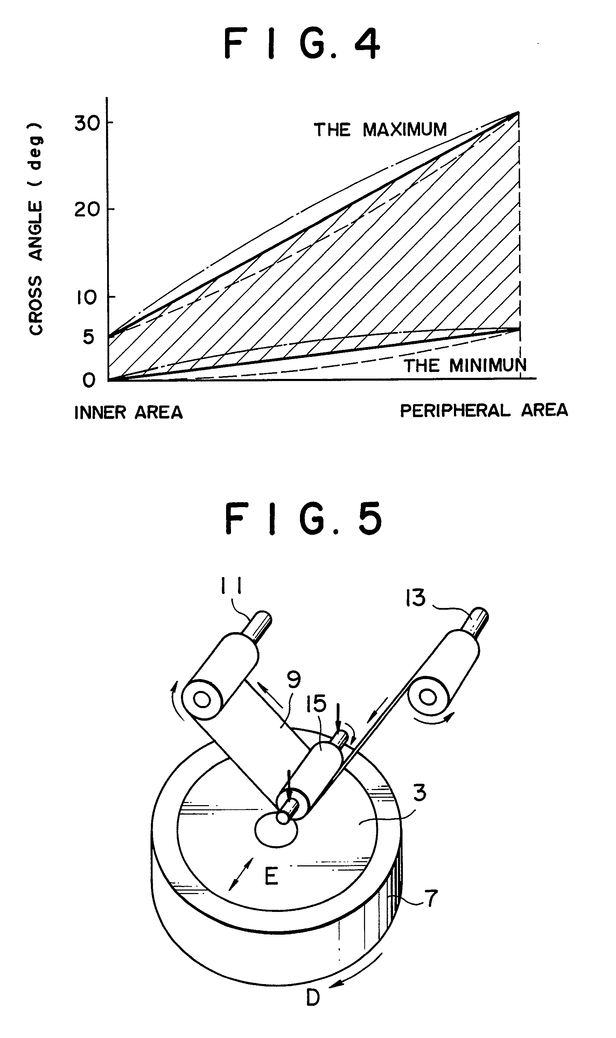

Figs. 2 and 3 show enlarged details of the areas A and B shown in Fig. 1, respectively and Fig. 4 shows the relationship between the cross angle and the radial direction on the present disk.

As shown in those drawings, a substrate 3 of a magnetic disk 1 has a plurality of grooves formed through texturing. The angle between a groove and the tangent line to the circumference of the magnetic disk 1 (cross angle) is smaller in the central area and larger in the peripheral area of the disk.

More specifically, the cross angle is 0 to 5 degrees in the central area and 5 to 30 degrees in the peripheral area.

The cross angle is increased in a linear manner in Fig. 4 but it may be increased in a curvilinear manner as shown by the broken and dot-and-dash lines in the figure.

Fig. 5 is a schematic representation for showing a texturing device.

The substrate 3 to be textured is mounted on a turntable 7, which rotates in the direction D. An abrasive tape 9 is wound around rollers 11 and 13 and the central portion of the abrasive tape 9 is pressed against the surface of the substrate 3 by means of a push rubber roller 15. The abrasive tape 9 is movable in the radial direction E by using a certain mechanism (not shown).

Now the operation of this texturing device will be described below.

The abrasive tape 9 is pressed against the rotating substrate 3 to polish it. Then the tape 9 is moved in the radial direction E of the magnetic disk at various moving speeds.

The moving speed of the tape 9 is set to a small value when the tape 9 is located in the central area of the disk and to a larger value when it is in the peripheral area. The cross angle is determined by both the number of rotations of the magnetic disk and the radial moving speed of the abrasive tape 9 and therefore, the cross angle of an outer groove in the surface of the substrate 3 is larger than that of an inner groove.

A foundation layer 107, a magnetic recording layer 109 and a protective layer 111 are sequentially sputtered on the textured substrate 3 in a similar manner to that shown in Fig. 8 to form the magnetic disk 1.

Next the actions of the present embodiment will be described below.

A magnetic disk device usually rotates the magnetic disk at a predetermined rotation speed and performs recording and reproducing operations at a single frequency both in the central and peripheral areas of the disk. The reproduction output is proportional to the peripheral speed of the disk and a small amount of magnetic inversion is obtained in the central area. Among other recording characteristics of the magnetic disk, the lowest reproduction output and the highest recording density largely depend on the magnetic characteristics, especially, on the magnetic force resistance Hc and the coercive squareness ratio. It is desirable that both of them are large in the central area.

On the other hand, the OWM characteristics depend on the magnetic force resistance Hc and the saturation magnetization Ms and it is desirable that both of them are small to some extent in the peripheral area of the disk.

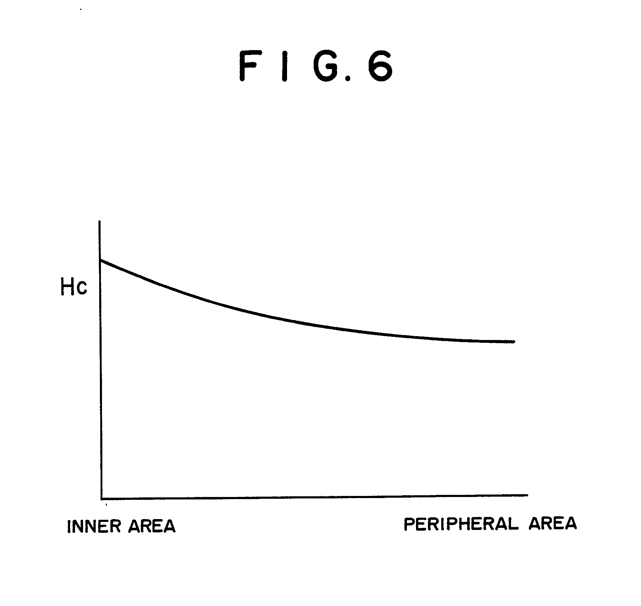

Of the magnetic characteristics obtained from the magnetic disk 1 of the present embodiment, the magnetic force resistance Hc in the tangential direction and the distribution in the radial direction are shown in Fig. 6.

As shown in the drawing, the magnetic anisotropy, which is directed to the running direction of the groove 5 formed through texturing, is almost equivalent to the tangential direction of the magnetic disk 1 in its central area, resulting in a high magnetic force resistance Hc. In the peripheral area, the cross angle is larger, resulting in a smaller magnetic force resistance Hc.

The central area of the magnetic disk, therefore, has a higher magnetic force resistance Hc and a good coercive squareness ratio while the peripheral area has a slightly lower magnetic force resistance Hc and saturation magnetization Ms. Therefore, the OWM characteristics can be improved in the peripheral area and the recording characteristics also can be improved in the entire disk.

Fig. 7 shows another texturing device.

In the drawing, a substrate 3 made of a nickel-plated and polished metal base is chucked on a spindle 10 for rotation. Fine powder 17 such as diamond or aluminum oxide powder is sprayed at high speed onto the rotating substrate 3 with a powder spray 15.

The powder spray 15 may be implemented with a rotating drum which contains the powder 17 and sprays it centrifugally, or with a pump which sprays that powder together with particles of pure water or air.

It is desirable that the powder 17 is a hard and less fragile material such as diamond which is not easily broken. However, the powder according to the present invention is not limited to a particular material and may be selected from other suitable materials which satisfy the requirements for shape and hardness of the substrate surface.

When such powder 17 collides with the substrate 3, the energy produced by the collision of the powder 17 causes the surface of the substrate 3 to be plastically deformed into depressions.

Then the shape of depressions can be suitable controlled by properly setting the material, diameter, shape, spray speed, and spray direction of the powder 17 and the rotation speed of the substrate 3.

It is desirable, however, that the powder 17 has a diameter of about 50 μm or less.

The magnetic disk textured according to the present invention may have no resultant burrs or projections on the surface of the substrate 3. Accordingly, it can prevent any possible damage to both the magnetic disk and head while they are sliding at the CSS operation.

## Claims

1. A magnetic disk comprising:
a substrate which has a plurality of grooves formed almost concentrically in the circumferential direction of said magnetic disk so that the angle between the disk tangent and a groove increases as the groove approaches the disk periphery, and
a magnetic recording layer formed on said substrate layer.

2. A magnetic disk according to Claim 1, wherein said angle is approximately 0 to 5 degrees in the innermost area of said disk and approximately 5 to 30 degrees in the outermost area.

3. A production method of magnetic disks comprising steps of forming a plurality of grooves almost concentrically in a circular substrate of a magnetic disk so that the angle between the disk tangent and a groove increases as the groove approaches the disk periphery, and forming a magnetic recording layer on said substrate layer.

4. A production method according to Claim 3, wherein said angle is approximately 0 to 5 degrees in the innermost area of said disk and approximately 5 to 30 degrees in the outermost area.

5. A production method according to Claim 3, wherein said grooves are formed by rotating said substrate and spraying hard powder on it.

6. A production method according to Claim 3, wherein said grooves are formed by rotating said substrate and moving an abrasive tape in the radial direction while keeping in contact with said layer.

EP 0 369 784 A2

# F I G. 1

# F I G. 2

0~5°

5

# F I G. 3

5°~30°

5

# F I G. 4

# F I G. 5

# F I G. 6

Hc

INNER AREA                    PERIPHERAL AREA

# F I G. 7

15

17

3

10

# F I G. 8
PRIOR ART

111
109
107
101
105
103
113

# F I G. 9
## PRIOR ART

113

C

# F I G. 10
## PRIOR ART

RADIAL
DIRECTION

CERCUMFEAENTIAL
DIRECTION

60

120

179

239

0    62    124    186    248

DISTANCE ( MICRONS )

# F I G. II
## PRIOR ART

EP 0 369 784 A2

# F I G. 12